(19) Europäisches Patentamt / European Patent Office / Office européen des brevets

(11) **EP 4 024 212 B1**

(12) **EUROPEAN PATENT SPECIFICATION**

(45) Date of publication and mention
of the grant of the patent:
**24.04.2024 Bulletin 2024/17**

(21) Application number: **20383168.0**

(22) Date of filing: **29.12.2020**

(51) International Patent Classification (IPC):
**G06F 9/50** *(2006.01)*    **G06F 9/48** *(2006.01)*
**G06N 3/04** *(2023.01)*    **G06N 3/08** *(2023.01)*

(52) Cooperative Patent Classification (CPC):
**G06F 9/5072; G06F 9/4881; G06N 3/088;**
G06N 3/045

(54) **METHOD FOR SCHEDULING INFERENCE WORKLOADS ON EDGE NETWORK RESOURCES**

VERFAHREN ZUR PLANUNG VON INFERENZBELASTUNGEN IN
EDGE-NETZWERK-RESSOURCEN

PROCÉDÉ DE PROGRAMMATION DE CHARGES DE TRAVAIL D'INFÉRENCE SUR DES
RESSOURCES DE RÉSEAU DE BORD

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**06.07.2022 Bulletin 2022/27**

(73) Proprietor: **Telefonica Digital España, S.L.U.
28013 Madrid (ES)**

(72) Inventors:
• **DIEGO ANDILLA, Ferran
  28013 Madrid (ES)**
• **LUQUE SERRANO, Jordi
  28013 Madrid (ES)**

(74) Representative: **Herrero & Asociados, S.L.
Edificio Aqua - Agustín de Foxá, 4-10
28036 Madrid (ES)**

(56) References cited:
**CN-A- 110 580 196    US-A1- 2019 266 015**

**Description**

**Field of the invention**

The present invention has its application within the telecommunication networks, more specifically, relates to the provisioning of on-demand inference services and Deep Neural Network (DNN) interference processing on edge networks.

More particularly, the present invention refers to an adaptive method for scheduling inference workloads at the network edge based on Reinforcement Learning (RL).

**Background of the invention**

Many real-time applications, e.g., Augmented/Virtual Reality (AR/VR), cognitive assistance, etc., rely on Deep Neural Networks (DNNs) to process inference tasks. Providing an inference service requires to address several challenges to meet this diverse set of application constraints, e.g., the selection of the appropriate variant of the model to be used (programming framework, compiler optimization, batching size, etc.), the processing unit to leverage for the inference (e.g., GPU, CPU, TPU), and the nodes and resources (e.g., memory, computing) to be allocated to every application. This requires management at different timescale. On a short timescale (i.e, milliseconds), a scheduler is in charge of selecting the appropriate computing instance for every new incoming request to meet its application requirements. This includes not only the selection of the computation node but also the appropriate model variant and computation technology. On a longer timescale (i.e., seconds, minutes), an orchestrator selects the proper model variants to deploy, optimizes their placement across the nodes, and allocates the appropriate resources to them.

Edge computing is considered a key infrastructure to deploy DNN-based applications with stringent delay or bandwidth/throughput requirements, as it moves computation capabilities closer to end-users with respect to centralized cloud platforms. This is especially the case for users connected via mobile access (e.g. 5G). US2019266015 provides an exemplary disclosure of scheduling DNN in edge computing.

However, the constrained nature of edge networks poses several additional challenges to the management of inference workloads: edge clusters can not provide unlimited processing power to DNN models, and often a trade-off between network and processing time should be considered when it comes to end-to-end delay requirements.

Most of the existing solutions address the common scenario where inference queries have to be scheduled over the resources of a Data Center. However, all these previous works addresses the scheduling problem only from the boundaries of a data center, considering neither (i) network latency, thus becoming no suitable in scenarios with real time constraints, nor (ii) resource constrained clusters, thus failing to address situations where workers cannot be indefinitely scaled up/out.

Another related set of approached concerns offloading with focus on the enddevices and provides intelligent offloading techniques for DNN tasks. However, decisions are taken considering only constraints such as latency requirements, device energy or cloud monetary budget.

Fewer and more recent are the trends that combine DNN with edge computing, with the aim of overcoming scalability and latency limitations of cloud computing. However, many of these approaches assume the possibility to indefinitely allocate new edge servers when needed, with no geographical restrictions, thus not addressing the problem of constrained resources at edge. Other existing works study the problem of processing data streams from scattered devices, exploiting the geographically distributed edge/cloud clusters, globally deciding on the cluster where each stream should be processed, as well as the model variant to employ and its configuration, considering computation and network bandwidth as constraints and seeking accuracy maximization. However, neither processing nor network latencies are taken as constraints, thus making these approaches not suitable for interactive or critical scenarios (e.g., virtual reality, autonomous driving, and more). There are solutions which focus on minimizing the end-to-end latency processing data flowing from the edge to the cloud, but only the problem of tasks allocation is considered, missing the possibility to optimize properly selecting model variants and their configurations.

Therefore, there is a need in the state of the art for providing a dynamic scheduling policy that can adapt to network conditions and workloads, taking into account not only accuracy (i.e., model selection) but also throughput and latency constraints under realistic edge deployment settings, when scheduling inference queries on DNN models in edge networks at short timescales (i.e., few milliseconds).

**Summary of the invention**

The present invention solves the problem of exploiting scattered cluster of resources to serve inference queries from multiple edge applications (e.g., AR/VR, cognitive assistance) and overcomes previously explained state-of-art work limitations by providing a Reinforcement Learning (RL) based method for scheduling inference requests which is able to adapt its decisions according to the system conditions.

The present invention addresses the aforementioned problem simultaneously considering (i) end-to-end latency, accuracy and throughput constraints, (ii) edge-cloud computing and multi-cluster deployment, (iii) real-time job dispatching, and (iv) optimization on model variant selection.

An aspect of the present invention refers to a method according to claim 1.

The method in accordance with the above described aspects of the invention has a number of advantages with respect to the aforementioned prior art, which can be summarized as follows:

- The present invention allows the optimization of the binding between inference stream requests and available Deep Learning models across the network, maximizing the throughput and ensuring that any requirement in terms of inference accuracy and end-to-end delay is satisfied.
- The present invention effectively improves the performance compared to static policies when scheduling resources that are deployed across the whole edge-cloud infrastructure.

These and other advantages will be apparent in the light of the detailed description of the invention.

## Description of the drawings

For the purpose of aiding the understanding of the characteristics of the invention, according to a preferred practical embodiment thereof and in order to complement this description, the following Figures are attached as an integral part thereof, having an illustrative and non-limiting character:

Figure 1 shows a network topology of geographically distributed computing clusters serving schedulers of interference workloads, according to a possible scenario of the invention.

Figure 2 shows an overview block diagram of a method for adaptive scheduling of edge tasks, according to a preferred embodiment of the invention.

Figure 3 shows a graphic comparing the performance of the method for adaptive scheduling of edge tasks to static scheduling policies known in the state of the art, running on a cloud-based network topology.

Figure 4 shows a graphic comparing the performance of the method for adaptive scheduling of edge tasks to static scheduling policies known in the state of the art, running on an edge-based network topology.

Figure 5 shows a graphic of the percentage of queries from different apps successfully processed on a full-edge topology, comparing the performance of the method for adaptive scheduling of edge tasks to static scheduling policies known in the state of the art, considering a fixed client rate.

Figure 6 shows a graphic of the percentage of queries from different apps successfully processed on a full-edge topology, comparing the performance of the method for adaptive scheduling of edge tasks to static scheduling policies known in the state of the art, considering dynamic client rates.

Figure 7 shows a graphic comparing the performance of the method for adaptive scheduling of edge tasks to static scheduling policies known in the state of the art, running on a data center-cloud topology.

Figure 8 shows a graphic of the percentage of queries from different apps successfully processed on a data center-cloud topology, comparing the performance of the method for adaptive scheduling of edge tasks to static scheduling policies known in the state of the art, considering dynamic client rates.

Figure 9 shows a graphic comparing the performance of the method for adaptive scheduling of edge tasks to static scheduling policies known in the state of the art, running on a central office-data center-cloud topology.

Figure 10 shows a graphic of the percentage of queries from different apps successfully processed on a central office-data center-cloud topology, comparing the performance of the method for adaptive scheduling of edge tasks to static scheduling policies known in the state of the art, considering dynamic client rates.

Figure 11 shows a graphic comparing the percentage of queries successfully processed by the method for adaptive scheduling of edge tasks and the percentage of queries successfully processed by static scheduling policies known in the state of the art, running on a full-edge topology.

Figure 12 shows a graphic of the percentage of queries from different apps successfully processed on a full-edge topology, comparing the performance of the method for adaptive scheduling of edge tasks to static scheduling policies known in the state of the art, considering dynamic client rates.

Figure 13 shows a graphic comparing the percentage of failed queries using the method for adaptive scheduling of edge tasks and the percentage of failed queries using static scheduling policies known in the state of the art, running on a full-edge topology.

Figure 14 shows a graphic comparing the percentage of queries rejected by the method for adaptive scheduling of edge tasks and the percentage of queries rejected by static scheduling policies known in the state of the art, running on a full-edge topology.

Figure 15 shows a graphic of average percentage values over time of the success queries comparing the method for adaptive scheduling of edge tasks with static scheduling policies known in the state of the art, running on a full-edge topology and with a burst variation of client rates.

Figure 16 shows a graphic of average percentage values over time of the success queries comparing the method for adaptive scheduling of edge tasks with static scheduling policies known in the state of the art, running on a full-edge topology and with a steady variation of client rates.

Figure 17 shows a graphic of the cumulative distribution of delay to infer by the adaptive scheduling method the best scheduling policy for the current system conditions for different client rates.

Figure 18 shows the learning curve for the training of the method for adaptive scheduling of edge tasks on a constant client rate for different network topologies.

## Preferred embodiment of the invention

The embodiments of the invention can be implemented in a variety of architectural platforms, operating and server systems, devices, systems, or applications. Any particular architectural layout or implementation presented herein is provided for purposes of illustration and comprehension only and is not intended to limit aspects of the invention.

A preferred embodiment of the invention, a method for Adaptive Scheduling of Edge Tasks, ASET, which leverages Reinforcement Learning, RL, to optimize its decisions dynamically based on the current system conditions.

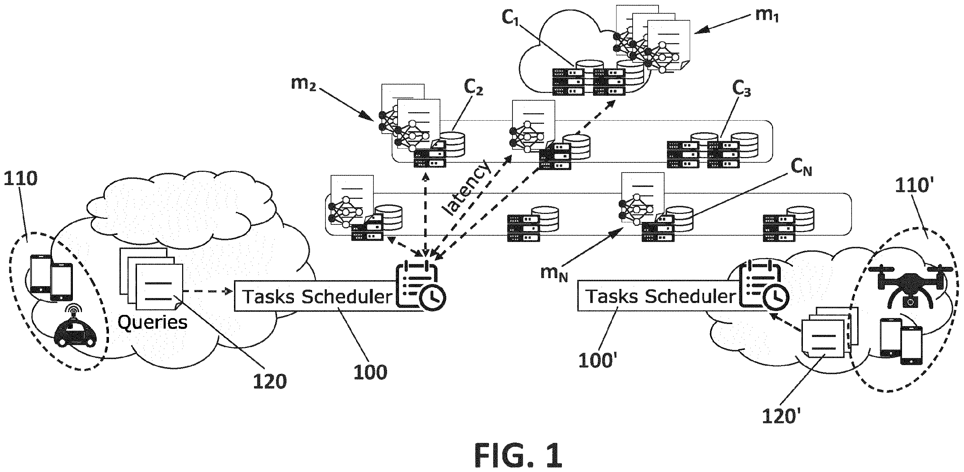

Figure 1 shows a scheduler (100, 100') dispatching streams of queries (120, 120') on an available model variant ($V1$, $V2$, ..., $V_M$) of a distributed edge-cloud infrastructure based on i) their real-time constraints, such as end-to-end latency, minimum accuracy, the input size and rate of the streams, and ii) the geographical position of clusters ($C1$, $C2$, ..., $C_N$). For system modelling of the scheduling inference tasks on the distributed edge-cloud infrastructure, a set of sources (110, 110'), e.g., end users, IoT devices, autonomous vehicles or flying vehicles,..., running a variety of applications, e.g., virtual reality, autonomous driving, etc., each relying on one or more DNN inference tasks are considered. Every application generates queries (120, 120') to be processed, i.e., each query represents the request to perform a specific inference task $j$, $j \in J$, where $j = 1, 2, ..., J$, and J is the set of inference tasks supported by the system. For example, inference tasks are object detection or speech recognition, to be performed on a given input, e.g., a video frame. Since applications often require more than one query to be processed, sequential queries (120, 120') are treated as streams, e.g., all the frames captured by an AR headset. Therefore, each query $q$ belongs to a stream $i$, where $i = 1, 2, ..., I$, $i \in I$ and I is the entire set of streams currently served by the system. Every query of a stream has a set of requirements such as a maximum end-to-end delay $D'$, and a minimum required accuracy $A^i$. Additionally, every stream $i$ has a data rate $\rho_i$, that is the number of queries submitted each second (e.g., frame rate), and every query of stream $i$ has an input of size $\zeta_1$ (e.g., frame size). Note that all queries of a stream are for the same task $j$ with same requirements.

Every inference task $j$ can be served using a Deep Neural Network, DNN, model $m$ among the set of $M^j$ models that are trained for task $j$. It follows the system provides a total of $N_m$ DNN models.

$$N_m = \sum_{j \in J} |M^j|$$

An example of application generating queries is object detection. A model $m$ represents a particular Neural Network architecture with pre-trained weights (e.g., yolo-v3, ssd-mobilenet-v1), and features a given accuracy $A_m$ (mean average precision - mAP). A model m can be deployed and run through different setups and underlying hardware (e.g., SSD Mobilenet v1 on (i) Tensorflow-GPU with batch size 8, or on (ii) Opencv-CPU batch size 1 and 2 replicas, and more), thus obtaining a set $V^m$ of different model variants (V1, V2, ..., $V_M$). A model variant v features a given processing delay $D_v$, throughput capacity $C_v$ (i.e., the maximum number of queries it can process per second), and resource usage

$$r_v \in \mathbb{R}^k_+$$

(e.g., in terms of CPU, system memory and GPU memory). Note that the processing delay may vary based on the size $\zeta_i \in \mathbb{R}_+$ of the input data, thus it is a function $D_v : \mathbb{R}_+ \to \mathbb{R}_+$ where $D_v$ refers to the time needed to process the maximum input size supported by the model (analogous considerations hold for the capacity $C_v$).

Considering a network topology of a geographically distributed cloud-edge infrastructure composed by a set $N_v$ of computing clusters (C1, C2, ..., $C_N$), e.g., a centralized data center, a telco regional cloud, an eNodeB) typically organized in a hierarchical topology, each cluster n potentially provides different resources. with an overall capacity of

$$c_n \in \mathbb{R}^k_+$$

the cluster n being denoted as and $c_{nk}$ representing the amount of resource k $k \in \mathbb{N}$ available on the cluster n, n = 1, 2,...,N. Example of resources include CPU, system memory and GPU memory.

Model variants (V1, V2, ..., $V_M$) are deployed at different computing clusters (C1, C2, ..., $C_N$) consuming different amount of resources. On a long timescale (i.e., seconds, minutes), an orchestrator selects the appropriate set of model variants to deploy, optimizes their placement of such variants across the clusters, and allocates the appropriate resources. Finally, stream sources are connected to a small cluster at the lower layer of the hierarchy. This can be either the antenna/eNodeB in case of cellular communication or the home gateway in the fixed access case. Queries need to be scheduled for processing across model variants (V1, V2, ..., $V_M$) available at different computing clusters (C1, C2, ..., $C_N$) to meet application requirements on a short timescale (i.e., tens of milliseconds).

In order to define the problem of scheduling interference tasks, it is assumed that a scheduler (100) is located at the nearest compute cluster available to existing stream sources, i.e., antenna/eN-odeB or the home gateway/central office in the fixed access case. It follows every stream source is served by a scheduler s among $N_s$ different ones (one per each lower layer cluster). Each scheduler s has a given average network delay $d^s_n$ towards each cluster n; and the associated delay deviation denoted as $n^s$ is also modelled. Note that an additional access delay from the stream source to the scheduler has to be taken into account (e.g, the radio latency between a device and the nearest 5G antenna). There is an additional access delay $d_i$ that affects stream i. Every scheduler is aware of each model variant v currently available on each cluster n, each with its current load $L_{vn}(t)$, measured in terms of incoming queries per second and taking into account that each stream i contributes to the total load as a fraction $\eta_v^i$ of its data rate $\rho_i$ (named fractional load), based on the stream data size $\zeta_i$.

Based on the current conditions of the available model variants (V1, V2, ..., $V_M$), for every stream i it serves, a scheduler s decides which model variant v on which cluster n should be used to process stream i. When scheduling a stream i to the proper model variant/cluster, the scheduler takes into account application requirements. Specifically, the scheduler considers the stream data size $\zeta_i$, its data rate $\rho_i$, its bit rate $b_i$, the maximum tolerated end-to-end delay D' and the minimum required accuracy A', satisfying the following constraints:

(i) the selected model variant *v* is a valid implementation of task *j* required by i,

$$v \in V^m \wedge m \in M^j$$
(equation 1)

(ii) the load capacity of the chosen model variant is not exceeded,

$$L_{vn}(t) + \eta_v^i \rho_i \leq C_v$$
(equation 2)

being $\eta_v^i$ the fractional load of stream *i* for model variant *v*;
(iii) the sum of expected network delay and processing time does not exceed the maximum tolerated delay,

$$2(\delta_i + d_n^s + 2\sigma_n^s) + b_i\zeta_i + D_v(\zeta_i) \leq D^i$$
(equation 3)

where the first addendum is the round-trip propagation time, the second is the transmission delay for one query and the third is the time needed to process the query;
(iv) the selected model provides an adequate accuracy

$$A_m \geq A^i$$ (equation 4)

A scheduling policy can be formally defined as follows.

Let us consider a stream i to be processed through a task j on an edge-cloud infrastructure that features a set of $V^m$ compatible model variants over $N_v$ clusters ($|N| = N_v$). A scheduling policy is any function $\beta$ binding stream i to a feasible model variant $v \in V^m$ deployed on cluster $n \in N$, so that constraints at Equations (1), (2), (3), and (4) are satisfied:

$$\beta : I \rightarrow V^m, N$$ (equation 5)

Note that, as requests are handled in real-time, scheduler decisions should be taken in an amount of time that is negligible compared to the stream latency requirements.

Based on the scheduling decisions, in a given time instant t the stream i will feature a reject ratio $q_i^R(t) \in [0, 1]$, i.e., the fraction of queries from stream i that have not been processed by the system because of resource unavailability, and a failure ratio $q_i^F(t) \in [0, 1]$, i.e. the fraction of queries that have been served violating one or more application requirements (i.e., delivered out of maximum tolerated delay).

The goal of the scheduler (100) is typically to maximize, over time, the fraction of queries (120) that are served successfully, i.e., to minimize the sum of reject ratio and failure ratio.

The following experiments show that, for a heterogeneous pool of applications, a policy that always performs better than the others does not exist: different applications may benefit differently from each scheduling strategy, and also the physical topology and the particular streams arrivals can be determinant.

For the experiments and comparison with the dynamically adaptive scheduling proposed here, several policies for static scheduling of inference tasks on edge clusters are also considered:

1) Closest: bind stream i to any feasible model variant $v_*$ located on the cluster $n_*$ that features the lower network latency to serving scheduler s, i.e.,

$$n^* = \arg\min_{n \in N} (d_n^s + 2\sigma_n^s)$$

This policy may lead to the early saturation of smaller clusters at the very edge, as they are always preferred.

2) Load balancing: bind the input stream to model variant $v_*$ on cluster $n_*$ such that

$$(v^*, n^*) = \arg\min_{v,n \in V^m \times N} \bar{L}_{vn}(t)$$

This policy can bring huge performance gains compared to Closest (above described); however, it may lead to unfair allocation when latency-sensitive applications are in the minority.

3) Farthest: bind stream i to any feasible model variant $v_*$ located on the cluster $n_*$ with the highest (still feasible) network latency, i.e.

$$n^* = \arg\max_{v \in N} (d_n^s + 2\sigma_n^s)$$

As opposed to Closest, this policy preserves smaller clusters at the very edge for those apps that really need them; however, it is highly affected by the unreliability of network delay for long distance communications.

4) Cheaper: bind stream i to model variant $v_*$ on cluster $n_*$ such that the expected end-to-end delay (round-trip and processing time) is maximized, i.e.,

$$(v_*, n_*) = \arg\min_{v,n \in V^m \times N} \left(2(d_n^s + 2\sigma_n^s) + D_v(\zeta_i)\right).$$

This policy is an improvement over Farthest, as it additionally tries to preserve the most performing model variants.

5) Random-proportional latency: bind stream i to model variant v on cluster n with probability $1/\left(2(d_n^s + 2\sigma_n^s) + D_v(\zeta_i)\right)$. This guarantees that, on a large enough number of streams, bindings are proportionate to end-to-end delays.

6) Random-proportional load: bind stream i to model variant v on cluster n with probability $C_v/L_{vn}(t)$. This guarantees that, on a large enough number of streams, bindings are proportional to the capacity of each model variant.

7) Least impedance: bind stream i to model variant $v_*$ on cluster $n_*$ such that end-to-end latency to s is minimized, i.e.,

$$(v^*, n^*) = \arg\min_{v,n \in V^m \times N} \left(2(d_n^s + 2\sigma_n^s) + D_v(\zeta_i)\right)$$

This greedy policy leads to the best performance when the overall load is low, but it may suffer from a high rejection rate once the Closest and Fastest model variants are saturated.

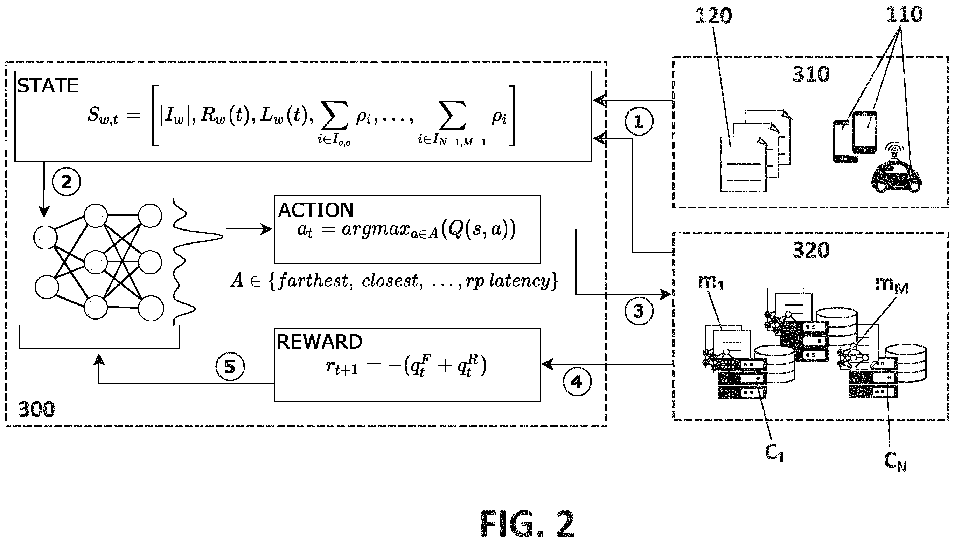

Based on these findings, the proposed adaptive scheduling approach, the ASET method, aims to learn the optimal policy depending on current system conditions, e.g, current applications, network topology, and stream arrivals that vary over time. Due to the lack of labeled data, the optimal policy learning is formulated as an RL problem; hence, an intelligent agent tries to learn the optimal policy selection strategy according to the observed state of the environment. This is accomplished by an RL policy that estimates a probability distribution of each possible action (policy selection) that cumulatively maximizes a reward (typically maximizing the fraction of queries that are served successfully), as illustrated in Figure 2.

Figure 2 shows an overview of the ASET method proposed here, where a state St is sampled (1) from the environment comprising the incoming workloads (310) of queries (120) from the applications running in the set of sources (110), and the pool of resources of the cloud-edge infrastructure or network (320). The state St is forwarded (2) through a DNN agent (300) using RL, which outputs (3) action At and performing action $A_t$ on the environment contributes (4) to reward $r_{t+1}$ obtained at the next step (5) of interaction by the RL-based DNN agent (300). The agent (300) is a learner and decision-maker, and the environment is the external world which the agent (300) interacts with at discrete time steps t. Given a state $S_t \in S$, where S is the set of possible states of the environment, the agent (300) can select an action $A_t \in A(S_t)$, standing for the set of available actions in state St. The agent (300) receives an observation of the environment St at time t and, one step later, a numerical reward, $r_{t+1} \in R \subset \mathbb{R}$, and it jointly determines the action $A_t$ to perform, which, in part, yields to next state $S_{t+1}$. In this example, these rewards are defined as a linear combination of the ratio of "failed" queries and the ratio of queries that have been "rejected" for lack of available resources.

A stochastic reinforcement learning, RL, policy can be formally defined as follows.

An RL policy $\pi_\phi$, where $\phi \in \mathbb{R}^d$ denotes policy parameters, is any function or algorithm that determines and maps the next action to take by an agent. A stochastic RL policy, additionally, estimates a probability distribution over actions $a \in A$ that the agent can take, where A is a discrete set of actions and stands for the set of available network scheduling policies β, at a given state s:

$$\pi_\phi: A \times S \rightarrow [0, 1] \qquad \text{(equation 6)}$$

$$\pi_\phi(a|s) \overset{\text{def}}{=\!=\!=} \mathbb{P} \text{ (take action a|given state s)}.$$

Overall, the goal of the proposed adaptive scheduling is to learn an optimal sequence of static network scheduling policies that maximizes the percentage of successfully dispatched streams. At a T seconds rate, the RL-based scheduler samples the environment by collecting a variety of observations from the edge-cloud infrastructure, e.g., responses and loads, building up the current state St of the environment. Then, the agent evaluates a discrete set A of actions and chooses an action $a_t \in A$. Note that the set of actions does not depend on the state itself, thus the sets $A(S_t) = A$ are the same. Therefore, every time that the agent (300) takes an action $a_t$, the state of the environment St is observed and a reward score $r_{t+1}$ is used as feedback information to improve the policy selection, as shown in Figure 2.

The particular policy $\beta_t$, selected by the agent at time t, is used to dispatch all incoming streams during the subsequent time window [t, t + T]. Therefore, given the corresponding states sequence S= [$S_0$, $S_T$ , $S_{2T}$ , ..., $S_{kT}$ ] with $k \in \mathbb{N}$ , the resulting overall scheduling policy $\beta(S) = [\beta_0, \beta_T , \beta_{2T} , ..., \beta_{kT} ]$ dynamically maps, with the corresponding baseline policies $\beta_t$, a stream i to a model variant v and its deployment on cluster n.

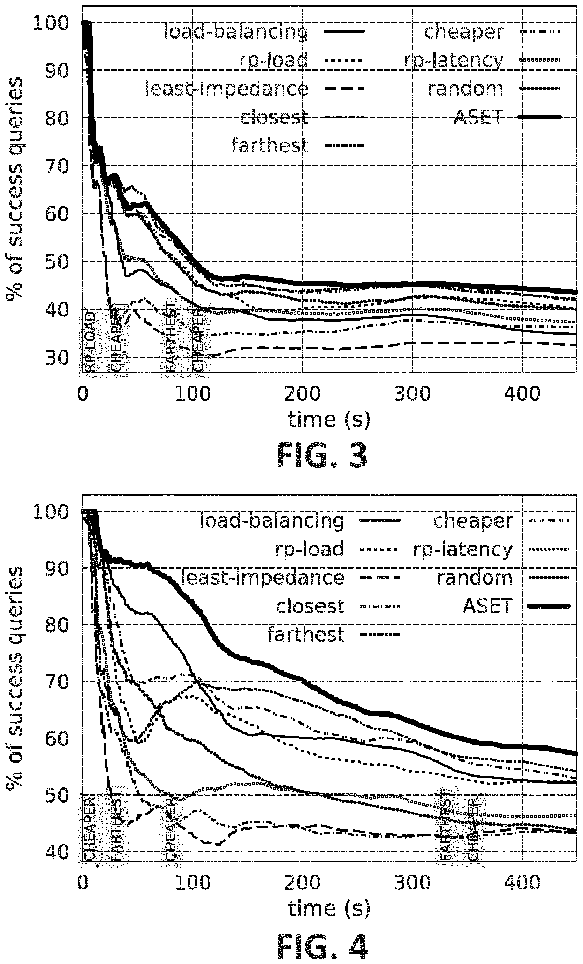

From now, and for the sake of simplicity, $\pi$ refers to the above defined stochastic RL policy learned by the ASET agent (300), which leads to a particular static policy sequence $\beta(S)$. It corresponds to any function employed to estimate the optimal sequence of actions that the agent (300) could perform at each time window [t, t+T] and given a state St, $\beta(S) = [A_0, A_T , A_{2T} , ..., A_{kT} ]$. The intuition of this behavior followed by the ASET agent (300) is provided in Figures 3 and 4: The ASET RL agent infers the optimal policy sequence based on the system conditions, seeking an optimal binding between workloads and model variants that maximizes the percentage of success queries. Figures 3 and 4 show plots of the percentage of success queries versus time t in seconds for the different, static and dynamically adaptive, scheduling policies and two runs: on a cloud-based topology and on an edge-based one respectively.

Note that each of the considered static scheduling policies corresponds to a deterministic agent that always returns the same action At independently of the system state; whereas the RL policy $\pi$ learned by the ASET agent (300) can be seen as a meta-policy (or as a policy of baseline scheduling strategies) that also satisfies the constrains from Equations (1), (2), (3), and (4).

The RL agent (300) has to cope with a discrete set of actions, with $A \subset \mathbb{N}$ . This is often modeled in literature as a stochastic process with no memory, which is a Markov Decision Process, MD). In this example, the MDP defined by tuples (S, A, T, R, $\gamma$) represents states comprised of partial observations from the system. Nonetheless, the model parameters of such MDP are unknown, i.e., the transition probabilities T(s'|a, s) and the rewards R(s'|a, s) of taking the action At = a and moving from state St = s to state $S_{t+1}$ = s'. Note that the ASET agent (300) experiences each transition among states at least once, or even multiple times to get a reliable estimation of both transition and cumulative rewards.

At each step t = kT, with $k \in \mathbb{N}$ , the RL agent can choose one of several possible scheduling policy-actions, $\beta_t = A_t$. The transition probability T(s'|a, s) depends in part on the chosen action, and, additionally, from some positive or negative reward that may be returned by every state transition, named return of actions. Overall, the objective is to find a strategy, i.e., a policy $\pi$ mapping to a sequence $\beta(S)$, which maximizes the expected return G($t$) of rewards over time. Thus, G($t$) is defined in terms of the cumulative weighted rewards along with states and given the corresponding optimal sequence of actions to take in the future:

$$G(t) = \sum_{\tau=0}^{H} \gamma^\tau r_\tau \qquad \gamma \in [0, 1]$$

(equation 7)

where $r_r = R(s'|a, s)$ is the reward at time step $\tau$ due to corresponding state transition (s, s'), $\gamma$ is a weighting factor that reduces the contribution of long-term rewards, usually known as the discount factor, and time $H$ is the last time step within a training episode. Therefore, the RL agent's target policy is:

$$\pi^*(a|s) = \arg\max_{\pi_\phi} \mathbb{E}_{t^* \sim \pi_\phi} \{G(t)\}$$

(equation 8)

which translates the scheduler state into a distribution over actions. Note that the expectation is computed over the distribution of trajectories $t_* = (s_0, a_0, s_1, ...)$.

In Q-Learning, the optimal pair values (s, a), i.e., those yielding to the sequence of optimal actions, are generally called Quality-Values (Q-Values) and noted as $Q_*(s, a)$. They correspond to the sum of weighted rewards that the RL agent can expect on average after performing action a on state s. It is also known as the expected return of actions,

$$Q(s,a) = \mathbb{E}_{t^* \sim \pi_\phi} \{G_t | S_t = s, A_t = a\}$$

(equation 9)

If an agent's trajectory follows the highest Q-Values, it is known that its policy is optimal and leads to the highest G(t) as well. Also, an accurate estimate of Q-Values can be found recursively by using the Bellman Optimality Equation, also known as the Value Iteration algorithm. In fact, Q-Learning is an adaptation of Bellman's value iteration algorithm, where a policy is implicitly, or off-line, learned by following trajectories yielding to the highest Q-Values. It is usually computed by dynamic programming and assumes that the optimal value of state St = s is equal to the reward it will get on average, after taking one optimal action a and adding the expected optimal value of all possible next states along the future path of decisions, that is

$$Q(s,a) = \mathbb{E}_\pi \{r + \gamma \max_{a'} Q(s',a') | s,a\}$$

Equation 9 turns out into the following iteration algorithm, which converges to the optimal $Q_*(s, a)$:

$$Q_{k+1}(s,a) \leftarrow \sum_{s'} \mathcal{T}(s,a,s')\left[r + \gamma \max_{a'} Q_k(s',a')\right]$$

(equation 10)

for all s' ∈ S, a' ∈ A and $k \in \mathbb{N}$ as iteration step.

For simplicity, all the elements of the transition probability matrix T are set to a value equal to 1, allowing initial transitions among all seen states. Once Q-Values are estimated, the optimal policy $\pi_*$ for the RL agent corresponds to choose the action that has the highest Q-Values: $\pi^*(a|s) = \arg\max_\pi Q_\pi(s,a)$ for all s ∈ S and a ∈ A = β static policies that have been considered.

However, previous algorithm does not scale for large MDPs with a large number of states. A solution is to approximate the optimal $Q_*(s, a)$ using a Deep Neural Network, named Deep Q-Network, DQN, to get an estimate Q(s, a; φ) ≈ Q·(s, a), where φ stands for the parameters of the DQN model. The using of a DQN for approximate Q-Learning is known as Deep Q-Learning.

In order to encode the state s, the state state St is modelled in a continuous fashion, representing the environment in a given time t as a set of some particular features sampled from the system and averaged along a time window of size T. Features are evaluated separately for each available worker w ∈ W, wherein a worker is a model variant instance v running on a particular cluster n, therefore it can be assumed that index w is w = n · v + v. The features are as follows: (i) the number $|I_w|$ of streams currently served by worker w, being $I_w$ = {i ∈ I| β(i) = (v, n)}; (ii) the current throughput $R_w(t)$ of worker w, in terms of responses delivered at the time instant t; (iii) the current load $L_w(t)$, measured in terms queries per second normalized on input size; (iv) number of incoming instant queries grouped by stream characteristics, e.g., queries of all streams that require end-to-end delay within a given range $[\delta^1, \delta^2[$ and features a data rate in the interval $[\rho^4, +\infty[$, i.e., $\Sigma_{i \in I_{1,4}} \rho_i$, where $I_{1,4}$ = {i ∈ I| $D^i \in [\delta^1, \delta^2[ \wedge \rho_i \in [\rho^4, +\infty[$}.

In particular, a partition 0 = $\delta^0 < \delta^1 < \delta^2 < ... < \delta^{N\delta-1}$ of $\mathbb{R}+$ is considered with $N_\delta$ delay intervals, and a second partition 0 = $\rho^0 < \rho^1 < \rho^2 < ... < \rho^{N\rho-1}$ of $\mathbb{R}+$ with $N_\rho$ input-rate intervals, evaluating $N_\delta \cdot N_\rho$ different sum of instant queries, that is one feature for each combination of the two partitioning sets. The features defined so far constitute a vector as:

$$S_{w,t} = \left[ |I_w|, R_w(t), L_w(t), \sum_{i \in I_{0,0}} \rho_i, \dots, \sum_{i \in I_{N_\delta-1, N_\rho-1}} \rho_i \right]$$

(equation 11)

where

$$S_{w,t} \in \mathbb{R}_+^{3+N_\delta \cdot N_\rho}$$

Therefore, the complete state S is modeled as a three-dimensional vector in $\mathbb{R}_+^{(3+N_\delta \cdot N_\rho) \times |W| \times T}$ that is, each feature in Eq.11 is first evaluated for each available worker (each model variant on each node), and then for each time instant within the considered time window. For instance, vector Sw stores, for worker w, every features in (11) evaluated at every time instant t-T +1, t-T +2, ..., t within time window [t - T + 1, t].

For the state vector encoding the references used from now on are simply s or $s_t$ for a generally speaking state or a state referred to a time window, respectively.

The proposed RL scheduling agent (300) is trained over a series of episodes that resemble various scenarios. Each episode corresponds to a different workload execution with given parameters, e.g. requirements from tasks, number of clients per minute ($\lambda$) or the seed value ($\zeta$) for RNG: random number generation). Each episode is concluded when the percentage of success queries, $q_t^S$ , falls below a given threshold $\theta$ or when a timeout H is reached. This allows us to speed up the training by terminating unsuccessful or steady episodes quickly. At every time step t, a reward $r_t$ scores the rate of successful queries (see lines 9-10 of the algorithm below), where $q_t^F$ is the ratio of "failed" queries, i.e., those delivered violating one or more constraints (e.g., out of tolerated delay), and $q_t^R$ is the ratio of queries "rejected" by the system for lack of resources, normalized by corresponding time window. $\psi$ is a penalty inverse proportional to the episode active time. It ensures that both short and bad action trajectories do not reach higher returns than optimal ones. Note that DQN network is used to minimize the target loss L (see lines 14-18 of the algorithm below) by Adam optimizer and $\alpha$ learning rate. It takes gradient steps on the Bellman error objective L, see factor C at line 16 and Eq. (10), concurrently with data collection from the replay buffer for an efficient off-line learning. This is a common hybrid approach to implement Q-Learning. Additionally, an ϙ-greedy exploration policy, see line 5, with parameter ϙ dynamically updated. The architecture of the proposed DQN consists of a stacking of convolutional layers that extracts temporal correlations from the state tensor S. Such feature extraction part is composed of three convolutional layers with 4x4 kernels along the time and feature dimensions, followed by Re-Lu activation and max-pooling. Finally, two linear layers squeeze the dimension from 256 to as many outputs as different static policies $\beta$.

The following algorithm shows a possible embodiment of the training procedure for the agent (300) of the ASET method:

1: initialize replay buffer $D = \emptyset$ ring of size $N_r$ and $\phi_0$ DQN parameters

2: initialize training RNG seeds $\zeta \in [0, ..., P-1]$

3: **for** *episode* k $\in [0, ..., M]$ **do**

4:     sample random seed $\zeta \sim \mathcal{U}(P)$

5:     initialize $\pi_k(a|s) = \epsilon\mathcal{U}(\beta) + (1-\epsilon)\delta(a = \arg\max_a Q(s, a; \phi_k))$

6:     **for** *step* t $\in [0, ..., H]$ **do**

7:         sample $a_t \sim \pi_k(a|s)$

8:         sample $s_{t+1}$ state from edge-network and reward $r_t$

9:         **if** $\varphi > 1 - (q_t^F + q_t^R)$ **then** $r_t = -(q_t^F + q_t^R)$

10:         **else** $r_t = \psi$

11:         $D \leftarrow D \cup \{(s_t, a_t, s_{t+1}, r_t)\}$ with circular replacement

12:         **if** $q_t^S \leq \theta$ **then** $t \leftarrow H$, ends this episode

13:     $\phi_{k,0} \leftarrow \phi_k$

14:     **for** *gradient descend step* g $\in [0, ..., G-1]$ **do**

15:         sample batch $B \subset D$ with $idx \sim \mathcal{U}(N_r)$

16:         compute $C_t \leftarrow r_t + \gamma \arg\max_{a_{t+1}} Q(s_{t+1}, a(s_{t+1}); \phi_k)$

17:         compute loss $L = \sum_i (C_i - Q(s_i, a_i; \phi_k))^2$

18:         update replay network $\phi_{k,g+1} \leftarrow \phi_{k,g} - \alpha\nabla_{\phi_{k,g}} L$

19:     update DQN parameters $\phi_{k+1} \leftarrow \phi_{k,G}$

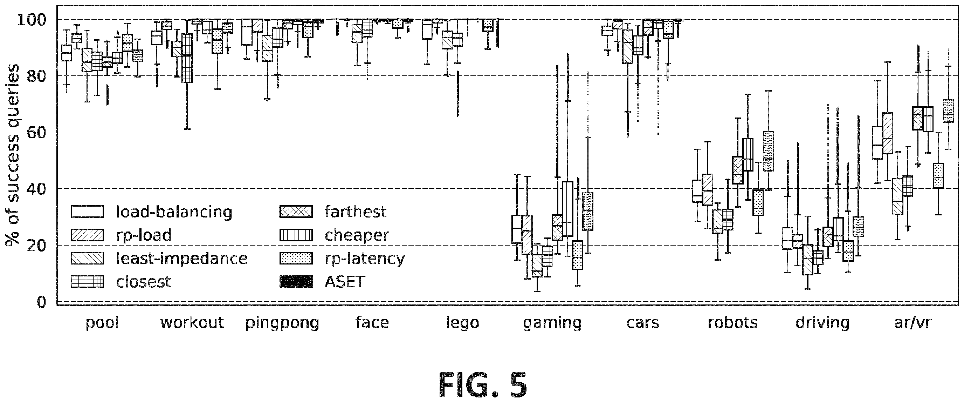

The proposed ASET method has been evaluated, as disclosed below and in Figures 5-18 using a prototype implementation of an edge inference system, comparing the performance of ASET to those of static scheduling policies.

The proposed prototype implements an edge inference system in which, on each cluster, a master deploys workers and routes streams between them and remote clients; each worker runs in a docker container and implements a pipeline that processes queries in FIFO order from different streams, based on the model variant batch size; a monitoring agent on each cluster collects stats from model variants usage and their performance, used (i) to build a catalog of model variants and (ii) to provide each scheduler with aggregated observations on the system state. The prototype profiles variants of pre-trained inference models with respect to their resource usage and performance, as disclosed below.

To evaluate the ASET method on a large scale, a simulated environment is set up where each worker simulates the inference task based on the profiling information available for its model variant. Therefore, empty responses are generated for each batch of queries after simulating a processing delay (based on a normal distribution). Additionally, the network delay between stream sources and destination clusters as well as the transmission delay are simulated. Apart from simulated workers, other system components are deployed using their prototype implementation. Therefore, the system operates on a realistic timescale.

In order to assess scheduling performance under realistic settings, the network topology of a large ISP is used. Specifically, the simulated environment is a cloud-to-edge topology with clusters of different sizes deployed hierarchically. This topology can provide clusters with computation capabilities at different layers: network access (e.g., antennas, home gateway), central offices (multiple payers), operator data center, and remote cloud (third parties). Specifically, the simulation focusses on three scenarios: (i) dc-cloud, where resources are deployed at ISP data center and remote cloud only; (ii) co-dccloud, where resources are deployed at central offices, operator data center and remote cloud; (iii) full-edge topology, where clusters are deployed at all layers previously mentioned. The simulations were limited to the topology serving 1,000 antennas from the full ISP topology, and appropriately scale resources. For the evaluation, it is assumed a 5G radio access technology with antennas deployed similarly to LTE. Network/transmission delays range from few milliseconds, to reach the eNodeBs behind the antennas, to the order of ten milliseconds for central offices and ISP data centers, and few tens of milliseconds for the remote cloud.

To simulate requests workload, the requests are generated following a Poisson distribution. Each generator runs on average $\lambda$ clients per minute querying the scheduler of a given geographical area (antenna). Once spawned, each client requests for processing a stream featuring randomized characteristics in terms of frame rate, required end-to-end latency, required model accuracy, frame sizes, stream duration. In the settings, a generator with A = 60 brings a load of almost 1000 queries per second on the serving antenna. To capture realistic queries characteristics, metrics of generated streams were modeled according to the reference edge applications listed below, in Table I.

TABLE I: Characteristics of reference applications

| Edge app | Tolerated delay | Frame rate | Streams duration | Required accuracy |
|---|---|---|---|---|
| Pool | 95 ms | 5 FPS | 5-10 s | 10 mAP |
| Workout Assistant | 300 ms | 2 FPS | 90 s | 10 mAP |
| Ping-pong | 150 ms | 15-20 FPS | 20-40 s | 15 mAP |
| Face Assistant | 370 ms | 5 FPS | 1-5 s | 30 mAP |
| Lego/Draw/Sandwich | 600 ms | 10-15 FPS | 60 s | 25 mAP |
| Gaming | 20-30 ms | 25 FPS | 10-30 m | 35 mAP |
| Connected Cars | 150 ms | 10-15 FPS | 15-30 m | 40 mAP |
| Tele-Robots | 25-35 ms | 10 FPS | 5 m | 40 mAP |
| Remote-driving | 20-30 ms | 20 FPS | 15-30 m | 50 mAP |
| Interactive AR/VR | 30-50 ms | 25 FPS | 30-60 s | 35 mAP |

For computing clusters and model variants, it is assumed a given reference hardware distribution across clusters, with computing capabilities increasing from the access network to the cloud. Specifically, the access network can be equipped with an 8-16 cores machine, 16 GB of memory and a small TPU, central offices can host in the order of tens of servers (32-64 CPUs, 128-256 GB, and few GPUs), ISP data centers can host hundreds of servers, while for the centralized cloud unlimited resources are assumed. In the evaluation, DNN models are used for the object detection task, as it is one of the most challenging and computation-intensive inference service. The prototype profiles MobileNet-SSD, Yolo-v3, and Tinyyolo-v2 models, with CPU and GPU variants on different batch sizes, scaling on allocated resources and number of replicas. Profiled information is used to run simulations on top of the three topologies described above. On each cluster, workers have been scaled on the number of replicas up to resource saturation.

Experimental results: The percentage of queries that are successfully processed by the system satisfying the application QoS requirements is consider as a performance metric. In the following, the performance of the ASET RL scheduling approach is compared with the performance of known static policies, evaluating the benefits that the ASET method can introduce in the various scenarios. Three different versions of ASET (one for each topology: dc-cloud co-dccloud and full-edge topology) were trained. In particular, the state is sampled using a time window T = 25 seconds, and an episode timeout of 8 minutes is experimentally chosen to avoid steady states in the network. The agent has been trained only on episodes with $\lambda$ = 60, but multiple client rates were evaluated in the experiment.

Figure 5 shows results of multiple runs with client rate $\lambda$ = 60. The avarage values shown as results suggest that there is no one-size-fits-all policy, as various applications may benefit differently from each policy.

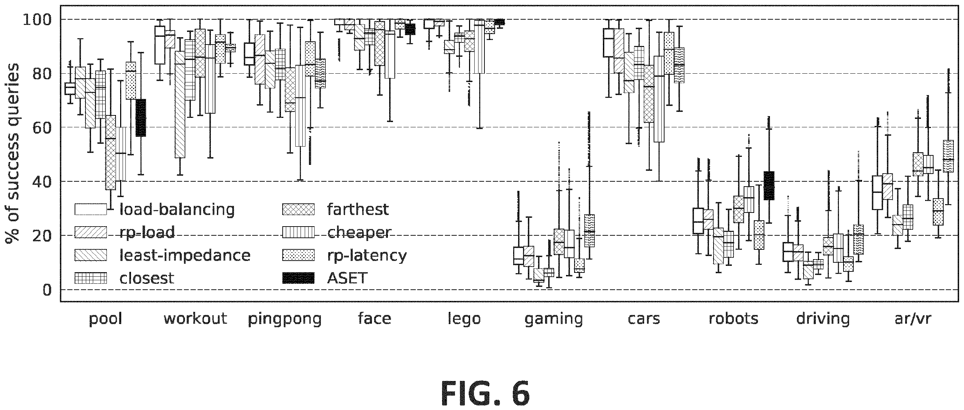

Figure 6 plots the avarage values resulting for episodes with dynamic lambdas $\lambda$ and shows that the uncertainty of relying on a single policy may be further increased, if the rate of stream requests on the antenna is variable.

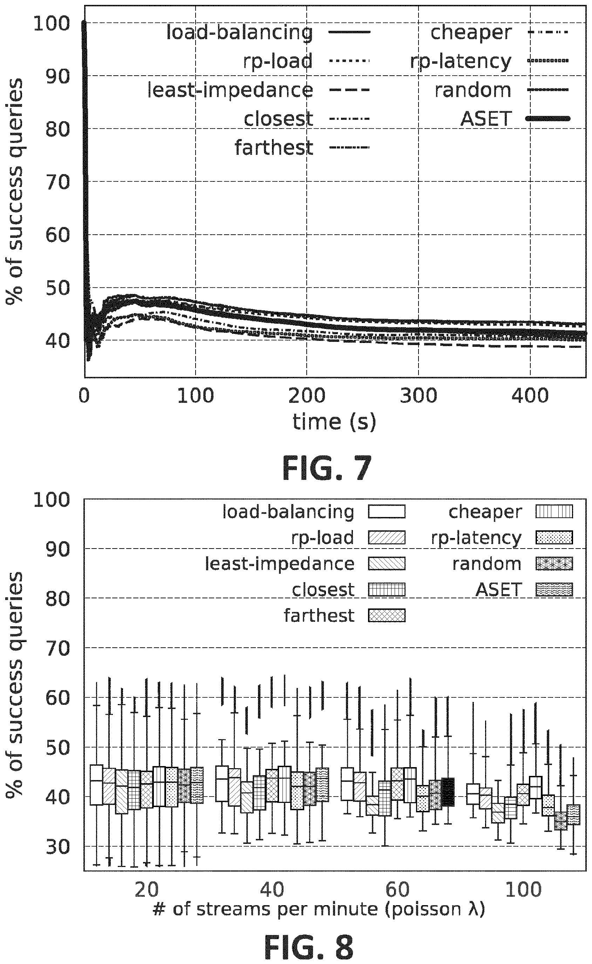

Results for the dc-cloud topology are shown in Figures 7 and 8. When all the available resources are located in a few centralized clusters, the various static policies have small differences in performance and a dynamic approach has little room for improvement. In particular, Figure 7 plots, for every moment of the simulation (time axis), the percentage of queries that are handled successfully, averaging multiple runs with different workloads. The graph shows that, for this topology, ASET does not improve over static policies, and it even performs worse for higher lambdas, as shown in Figure 8.

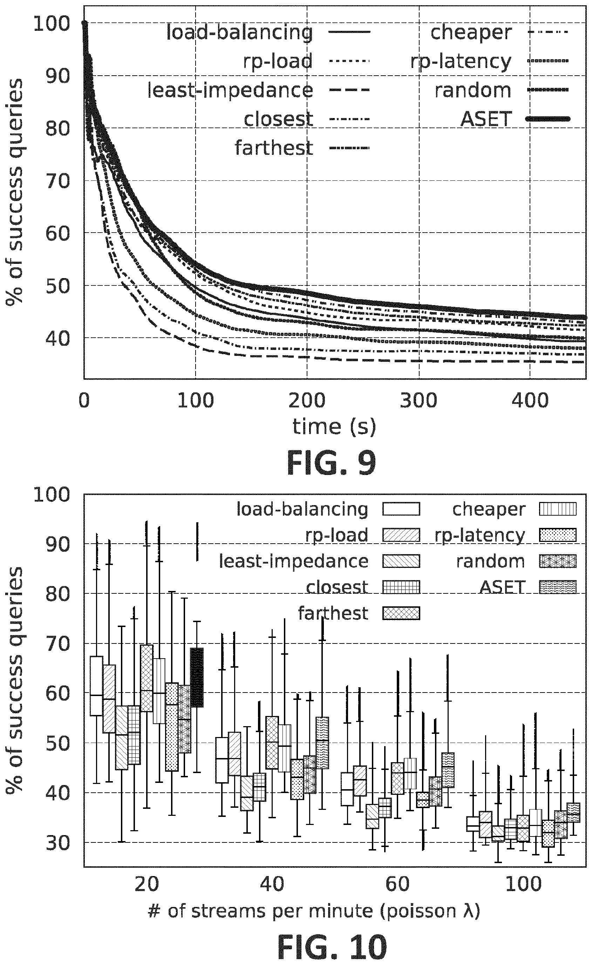

Figures 9 and 10 show that moving some resources to Central Offices (co-dc-cloud topology) makes a huge difference: in general, all the policies achieve a higher success ratio on this configuration, as shown in Figure 9, as they can exploit the additional lower latency spots, and the higher level of distribution gives to ASET a certain margin of improvement. Figure 10 shows that ASET introduces some improvement over all the baselines for every lambda, client rate $\lambda$, despite being trained only for $\lambda$ = 60.

The results so far suggest that a good distribution of computing resources is a key factor to improve against static scheduling policies.

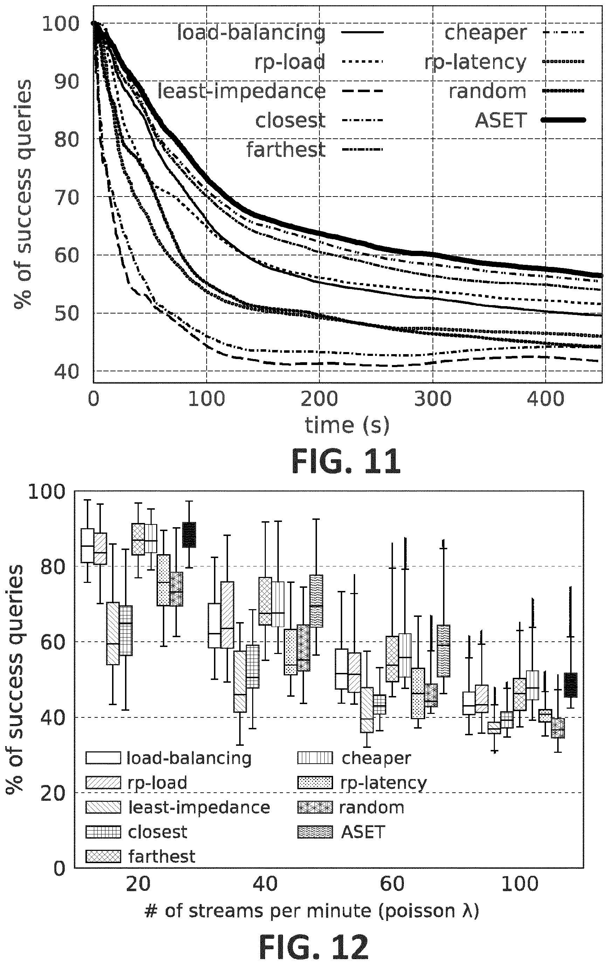

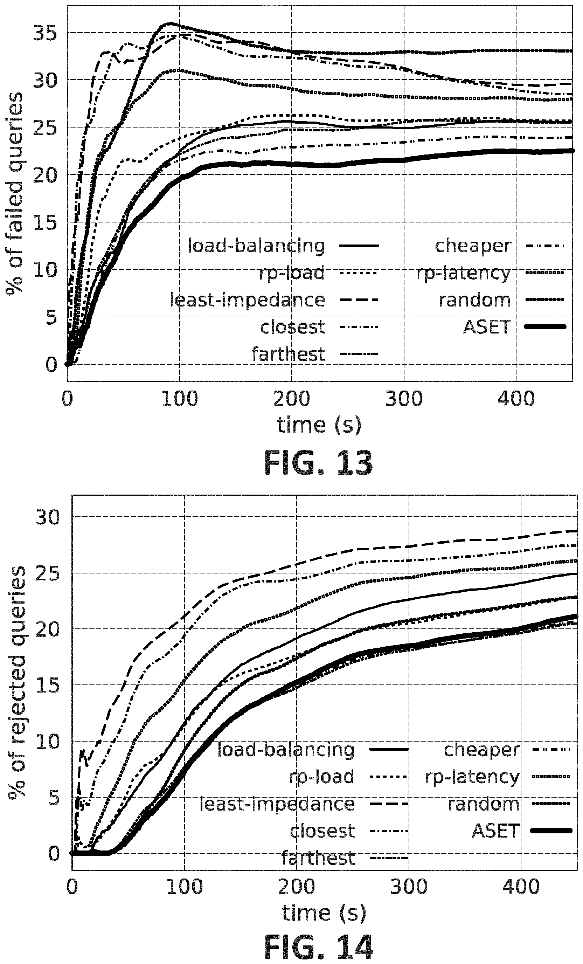

As shown in Figures 11-14, the benefits of using a dynamic scheduling approach become more concrete in a full-edge topology, where resources are better distributed on multiple smaller clusters in different locations. In fact, Figure 11 shows that the dynamic approach of ASET is able to achieve a constant improvement over any static policy, with a higher success ratio over time. In particular, Figures 13 and 14 show that, while maintaining the same rejection rate as the best static-policy, ASET effectively reduces the number of queries that are handled violating one or more QoS requirements. Moreover, Figure 12 shows that an ASET agent trained only for $\lambda$ = 60 can also generalize on different requests rate, even supporting a load of more than 1600 queries per second ($\lambda$ = 100) on a single antenna.

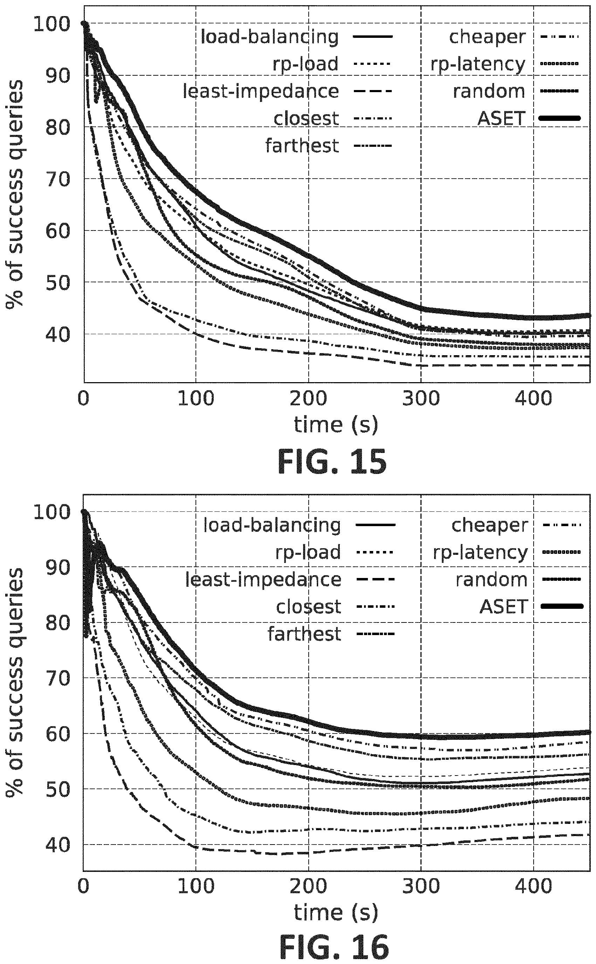

Some additional experiments have performed to evaluate how the system behaves in dynamic situations where the requests rate $\lambda$ varies over time. Similar to previous plots, the outcomes for this set of experiments are shown in Figures 15 and 16 averaging values over time for multiple runs. For this purpose, some dynamic runs were set up where the lambda value changes every 150 seconds: a first pattern simulates a particularly fast variation with values of 20, 60, and 100 clients per minute, as shown in Figure 15; a different pattern simulates a more steady scenario where the requests rate first moves from 60 to 40 clients per minute, then drops to 20, and finally slowly goes back to 60, as shown in Figure 16. Results in both figures show that having a dynamic requests arrival even introduces a bigger margin for improvement that ASET effectively exploits reaching the highest percentage of queries handled successfully. This appears particularly evident in the case shown in Figure 15 where the variation between client arrivals is faster and bigger. This result suggests that, while some of the static policies may achieve decent performance when the system load is stable, they struggle on more dynamic scenarios. In such situations, an adaptive algorithm such as ASET is more suitable as it can learn how to best optimize the system under different conditions. Moreover, results suggest that ASET training generalizes enough as the algorithm performs well under previously unseen dynamic conditions.

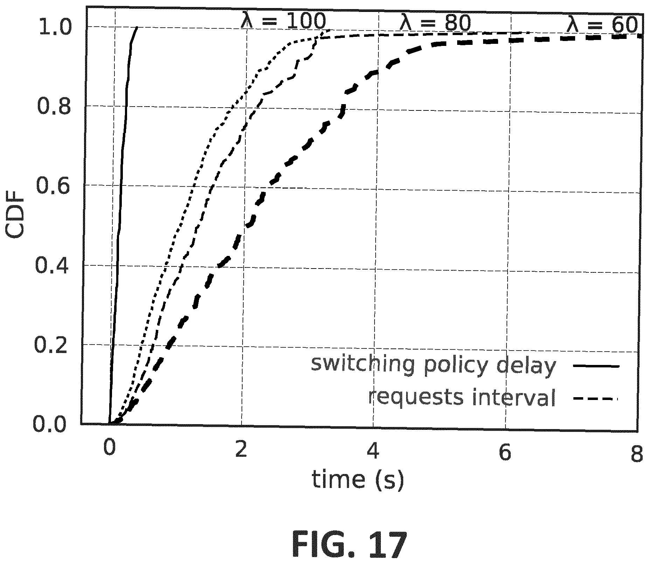

Figure 17 shows the cumulative distribution function (CDF) of the delay for switching policies, that is, the time needed by ASET to infer a switching decision from the current policy to the one that is best suitable for the current system conditions (nondashed line of the plot). The switching delay is compared with distributions of the intervals between subsequent requests for different lambdas. As shown, even for very large client loads (100 clients connected to the antenna), the time interval between two stream arrivals is typically in the scale of seconds or hundreds of milliseconds, while the delay for switching between policies is one order of magnitude smaller.

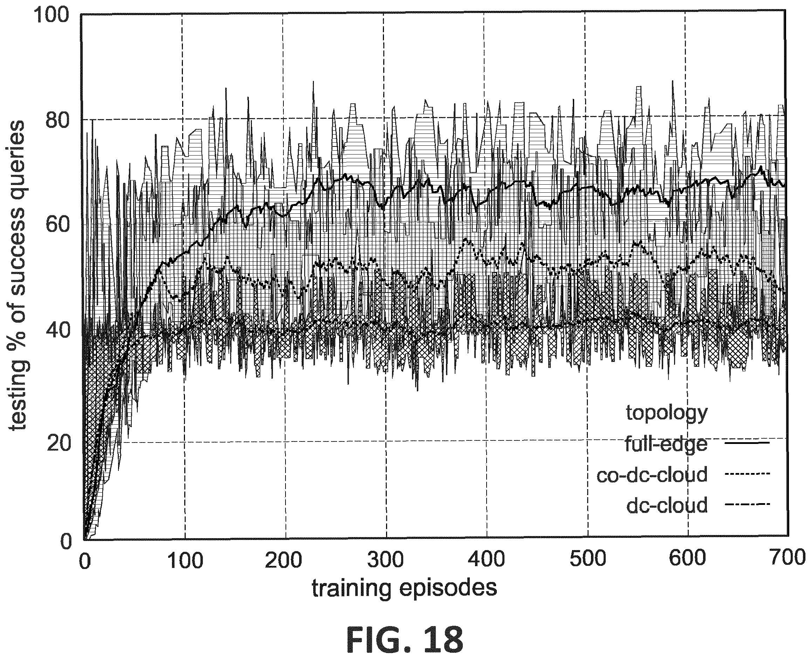

Finally, Figure 18 shows the learning curve while training the ASET agent for different topologies on continuous stream request arrivals. The figure shows that ASET quickly reaches a certain level of performance in the first training iterations (before 100 episodes) independently from the topology complexity, leaving room for extra improvements to the subsequent episodes based on the margin left by the topology itself.

Note that in this text, the term "comprises" and its derivations (such as "comprising", etc.) should not be understood in an excluding sense, that is, these terms should not be interpreted as excluding the possibility that what is described and defined may include further elements, steps, etc.

**Claims**

1. A method for scheduling inference workloads over a distributed pool of edge network resources, comprising:

   - dispatching by a scheduler (100, 100') streams of queries (120, 120') from a set of sources (110, 110') running a plurality of applications, each query representing a request to perform an inference task which is served using a deep neural network, DNN, agent (300);
   **characterized in that** the scheduler (100, 100') dispatches the streams of queries (120, 120') having a data size and a data rate, according to a model variant (V1, V2, ..., VM) of a geographically distributed cloud-edge network comprising computing clusters (C1, C2, ..., CN), the model variant (V1, V2, ..., VM) based on: i) each geographical position of the clusters (C1, C2, ..., CN) and ii) a maximum end-to-end latency in the cloud-edge network to the scheduler (100, 100'), a minimum accuracy to serve the queries (120, 120'), and the data size and data rate of the streams of queries (120, 120'); and
   the DNN agent (300) uses a reinforcement learning policy that estimates a probability distribution of each available action that cumulatively maximizes a reward and determining a subsequent action to be taken by the agent based on the estimated probability, wherein each available action is defined by a set of scheduling policies available in the edge network and the reward is defined as a ratio of queries that are served successfully by the DNN agent (300).

2. The method according to claim 1, wherein the reward is calculated as a linear combination of the ratio of failed queries and the ratio of rejected queries due to a lack of available edge network resources.

3. The method according to claim 1, wherein estimating the probability distribution of each available action comprising:

   - receiving by the DNN agent (300) at a time t a state sampled (1) from an environment of the DNN agent (300), the environment comprising the set of sources (110, 110') and the pool of edge network resources (320);
   - receiving, at a next time t+1, the calculated reward; and
   - determining the subsequent action to perform on the environment and which contributes to a next state to be received by the DNN agent (300) at the next time t+1.

4. The method according to any proceeding claim, wherein the inference tasks are object detection or speech recognition.

5. The method according to any proceeding claim, wherein the set of sources (110, 110') are end users of a mobile network with 5G radio access.

6. The method according to any proceeding claim, wherein the distributed edge network resources are selected from memory and computing resources of Tensor Processing Unit, TPU; memory and computing resources of Graphical Processing Unit, GPU; and memory and computing resources of Control Processing Unit, CPU.

**Patentansprüche**

1. Verfahren zum Planen von Beeinflussbarkeit von Inferenz-Workloads über einen verteilten Pool von Edge-Netzwerk Ressourcen, wobei das Verfahren aufweist:

- Versenden von Abfrage-Datenströmen (120, 120') durch einen Disponenten (100, 100') aus einem Satz von Quellen (110, 110'), auf denen eine Vielzahl von Anwendungen läuft, wobei jede Abfrage eine Anforderung darstellt, um eine Inferenzaufgabe auszuführen, welche unter Verwendung eines Deep Neural Network (DNN)) Agentens (300) bedient wird;
**dadurch gekennzeichnet, dass** der Disponent (100, 100') die Abfrage-Datenströme (120, 120') versendet, die eine Datengröße und eine Datenrate haben, die gemäß einer Modellvarianten (V1, V2, ..., VM) eines geografisch verteilten Cloud-Edge-Netzwerkes sind, das aus Rechenclustern (C1, C2, ..., CN), der Modellvarianten (V1, V2, ... , VM) besteht, die basiert auf: i) jeder geografischen Position des Clusters (C1, C2, ... , CN) und ii) einer maximalen durchgängigen Wartezeit im Cloud-Edge-Netzwerk zum Disponenten (100, 100'), eine Mindestgenauigkeit zum Bedienen der Abfragen (120, 120'), und der Datengröße und Datenrate der Datenströme der Abfragen (120, 120'); und
der DNN-Agent (300) eine Verstärkungslernstrategie verwendet, die eine Wahrscheinlichkeitsverteilung jeder verfügbaren Aktion berechnet, die kumulativ eine Belohnung maximiert und eine nachfolgende Maßnahme festlegt, die vom Agenten zu unternehmen ist, basierend auf der abgeschätzten Wahrscheinlichkeit, wobei jede verfügbare Aktion durch einen Satz von Zeitplanungsstrategien definiert ist, die im Edge-Netzwerk verfügbar sind und die Belohnung wird als Verhältnis der Abfragen definiert, die vom DNN-Agenten (300) erfolgreich bedient werden.

2. Verfahren nach Anspruch 1, wobei die Belohnung als eine lineare Kombination aus dem Verhältnis fehlgeschlagener Abfragen und dem Verhältnis abgelehnter Abfragen aufgrund eines Mangels an verfügbaren Edge-Netzwerk Ressourcen berechnet wird.

3. Verfahren nach Anspruch 1, wobei die Wahrscheinlichkeit von jeder verfügbaren Tätigkeit berechnet wird, wobei die Tätigkeit beinhaltet:

- Empfangen durch den DNN-Agent (300) zu einem Zeitpunkt t einer abgetasteten Beschaffenheit (1) von einer Ausstattung des DNN-Agenten (300), wobei die Ausstattung den Satz von Quellen (110, 110') und den Pool von Edge-Netzwerk Ressourcen (320) aufweist;
- Empfangen der berechneten Belohnung zu einem nächsten Zeitpunkt t+1; und
- Bestimmen der anschließenden in der Ausstattung auszuführenden Tätigkeit, und was zu einer nächsten Beschaffenheit beiträgt, die vom DNN-Agent (300) zum nächsten Zeitpunkt t+1 zu empfangen ist.

4. Verfahren nach einem der vorhergehenden Ansprüche, wobei die Interferenzaufgaben Objekterkennung oder Spracherkennung sind.

5. Verfahren nach einem der vorhergehenden Ansprüche, wobei der Satz von Quellen (110, 110') Endnutzer eines Mobilfunknetzes mit 5G-Funkzugang sind.

6. Verfahren nach einem der vorhergehenden Ansprüche, wobei die verteilten Edge-Netzwerk Ressourcen aus Speicher- und Rechenressourcen der Tensor-Verarbeitungseinheit (Tensor Processing Unit, TPU), aus Speicher- und Rechenressourcen der Bildverarbeitungseinheit (Graphical Processing Unit, GPU) und aus Speicher- und Rechenressourcen der Ansteuerungsverarbeitungseinheit (Control Processing Unit, CPU) ausgewählt werden.

**Revendications**

1. Procédé de programmation de charges de travail d'inférence sur un regroupement distribué de ressources de réseau périphérique, comprenant :

   - la répartition par un programmateur (100, 100') de flux de demandes (120, 120') en provenance d'un ensemble de sources (110, 110') exécutant une pluralité d'applications, chaque demande représentant une requête pour réaliser une tâche d'inférence qui est desservie en utilisant un agent de réseau neuronal profond, DNN, (300) ; **caractérisé en ce que** le programmateur (100, 100') répartit les flux de demandes (120, 120') présentant une taille de données et un débit de données conformément à une variante de modèle (V1, V2, ..., VM) d'un réseau de périphérie de nuage distribué géographiquement comprenant des groupes de calcul (C1, C2, ..., CN), la variante de modèle (V1, V2, ..., VM) étant basée sur : i) chaque position géographique des groupes (C1, C2, ..., CN) et ii) une latence de bout en bout maximum dans le réseau de périphérie de nuage par rapport au programmateur (100, 100'), une précision minimum pour desservir les demandes (120, 120') et la taille de données et le débit de données des flux de demandes (120, 120') ; et
   l'agent DNN (300) utilise une politique d'apprentissage par renforcement qui estime une distribution de probabilité de chaque action disponible qui maximise de façon cumulative une récompense et la détermination d'une action subséquente à prendre par l'agent sur la base de la probabilité estimée, dans lequel chaque action disponible est définie par un ensemble de politiques de programmation disponibles dans le réseau périphérique et la récompense est définie en tant que taux de demandes qui sont desservies avec succès par l'agent DNN (300).

2. Procédé selon la revendication 1, dans lequel la récompense est calculée en tant que combinaison linéaire du taux de demandes en échec et du taux de demandes rejetées du fait d'une absence de ressources de réseau périphérique disponibles.

3. Procédé selon la revendication 1, dans lequel l'estimation de la distribution de probabilité de chaque action disponible comprend :

   - la réception par l'agent DNN (300), à un instant t, d'un état échantillonné (1) à partir d'un environnement de l'agent DNN (300), l'environnement comprenant l'ensemble de sources (110, 110') et le regroupement de ressources de réseau périphérique (320) ;
   - la réception, à un instant suivant t + 1, de la récompense calculée ; et
   - la détermination de l'action subséquente à réaliser sur l'environnement et qui contribue à un état suivant devant être reçu par l'agent DNN (300) à l'instant suivant t + 1.

4. Procédé selon l'une quelconque des revendications précédentes, dans lequel les tâches d'inférence sont une détection d'objet ou une reconnaissance de parole.

5. Procédé selon l'une quelconque des revendications précédentes, dans lequel les sources de l'ensemble de sources (110, 110') sont des utilisateurs finaux d'un réseau mobile avec accès radio 5G.

6. Procédé selon l'une quelconque des revendications précédentes, dans lequel les ressources de réseau périphérique distribuées sont sélectionnées parmi des ressources en termes de mémoire et de calcul d'une unité de traitement de tenseur, TPU ; des ressources en termes de mémoire et de calcul d'une unité de traitement graphique, GPU ; et des ressources en termes de mémoire et de calcul d'une unité de traitement de contrôle, CPU.

FIG. 1

FIG. 2

**FIG. 3**

**FIG. 4**

**FIG. 5**

**FIG. 6**

**FIG. 7**

**FIG. 8**

**FIG. 9**

**FIG. 10**

**FIG. 11**

**FIG. 12**

**FIG. 13**

**FIG. 14**

**FIG. 15**

**FIG. 16**

**FIG. 17**

26

FIG. 18

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2019266015 A